(19) **Europäisches Patentamt / European Patent Office / Office européen des brevets**

(11) **EP 2 896 730 B1**

(12) **FASCICULE DE BREVET EUROPEEN**

(45) Date de publication et mention
de la délivrance du brevet:
**30.11.2016 Bulletin 2016/48**

(51) Int Cl.:
*F26B 21/08* (2006.01)    *D04H 1/492* (2012.01)
*D21F 5/18* (2006.01)    *D21F 5/20* (2006.01)
*F26B 13/00* (2006.01)    *F26B 23/00* (2006.01)
*F26B 13/16* (2006.01)    *F26B 21/00* (2006.01)

(21) Numéro de dépôt: **15150143.4**

(22) Date de dépôt: **06.01.2015**

(54) **Procédé et installation de séchage d'un voile humide**

Verfahren und anlage zum trocknen einer nassen warenbahn

Method and installation for drying a wet sheet material

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.01.2014 FR 1400077**

(43) Date de publication de la demande:
**22.07.2015 Bulletin 2015/30**

(73) Titulaire: **ANDRITZ Perfojet SAS
38330 Montbonnot (FR)**

(72) Inventeurs:
• **Schmit, Laurent**
**38420 Le Versoud (FR)**
• **Ayrault, Xavier**
**38580 Allevard les Bains (FR)**

(74) Mandataire: **Eidelsberg, Victor Albert et al
Cabinet Flechner
22, Avenue de Friedland
75008 Paris (FR)**

(56) Documents cités:
DE-A1-102006 062 234    DE-B1- 2 802 156
US-A1- 2005 132 598    US-B2- 6 551 461

**Description**

Dans le domaine de la production de papier, et dans le domaine de la production de non-tissés utilisant la technologie de liage par jets d'eau, les voiles ont la particularité de sortir humide après la phase de formation et de consolidation. En effet :

- La production de papier requiert de mélanger la fibre papetière avec de l'eau afin de pouvoir la délivrer sur un convoyeur de formation et favoriser la liaison de la nappe fibreuse par liaisons hydrogène.
- Le procédé de liage par jet d'eau utilise des jets d'eau sous pression pour entrelacer les fibres et donc humidifie de ce fait la nappe fibreuse.

Dans ces des procédés, les voiles produits ont besoin d'être séchés par évaporation avant de pouvoir être bobinés.

Pour ce faire, il est courant d'utiliser des fours à air traversant (type OMEGA ou à plat) pour effectuer cette opération de séchage en ligne.

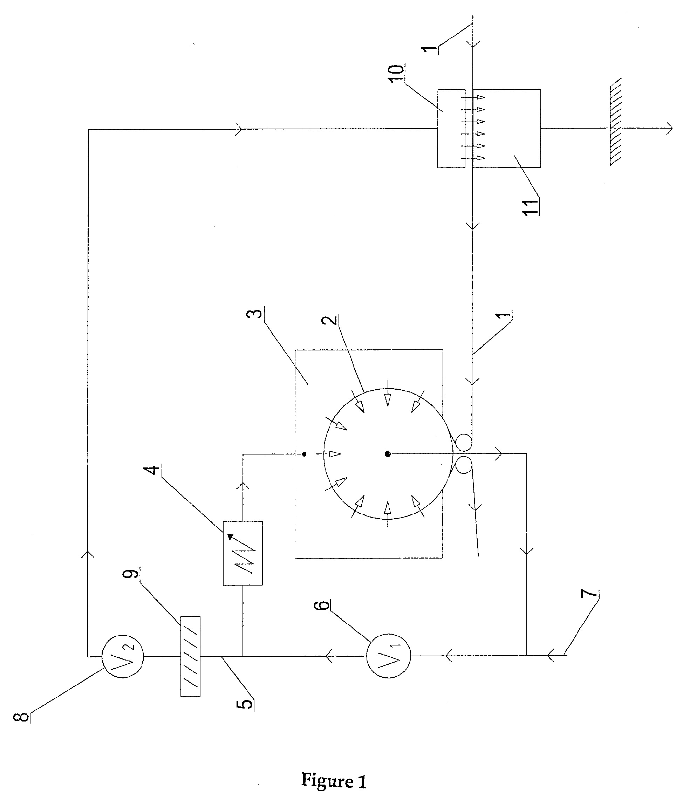

La figure 1 présente le schéma de fonctionnement d'un four à air traversant.

Le voile à sécher 1 circule autour d'un tambour 2 (ou sur un convoyeur dans le cas d'un four à plat). On injecte de l'air chaud sous pression dans la hotte 3 grâce à un ventilateur V1 6 (appelé ventilateur principal) et à une source de chaleur 4 qui chauffe l'air. Cette source de chaleur 4 peut être par exemple un brûleur à gaz ou un échangeur thermique (à huile, air ou eau).

La température de l'air chaud injecté dans la hotte 3 est régulée par l'action de la source de chaleur 4.

Cet air chaud traverse ensuite le voile humide et le tambour 2 (ou le convoyeur dans le cas d'un four à plat) : par ce procédé, l'eau contenue dans le voile est évaporée au fur et à mesure que le voile avance sur le tambour 2 (ou sur le convoyeur dans le cas d'un four à plat). L'air qui a traversé le voile s'est refroidi et s'est chargé en humidité. Il est alors aspiré à l'intérieur du tambour 2 (ou sur le convoyeur dans le cas d'un four à plat) par le ventilateur V1 6, et à nouveau réchauffé par la source de chaleur 4 et réinjecté dans la boucle et ainsi de suite.

La source de chaleur 4 peut être placée en amont ou en aval du ventilateur V1 6. De préférence, elle est placée en amont dans le cas d'un brûleur à gaz et en aval dans le cas d'un échangeur thermique.

Une partie de l'air froid et humide doit être évacuée à l'extérieur de la boucle afin de ne pas concentrer l'humidité dans la boucle de circulation. On évacue donc une partie de l'air froid et humide (5 à 30% du débit total) par la tuyauterie de dérivation 5 grâce à la pression générée en sortie par le ventilateur V1 6 si elle est suffisante ou grâce à un ventilateur de dérivation supplémentaire V2 8 si la pression générée par le ventilateur V1 6 n'est pas suffisante.

La tuyauterie de dérivation peut être connectée en amont de V1.

Le débit de l'air dérivé est régulé soit en agissant sur la vitesse de rotation du ventilateur V2 8, soit en agissant sur l'ouverture des volets de réglage 9.

Pour combler ce déficit d'air dans la boucle, on aspire dans la salle de production ou en dehors du bâtiment de l'air d'appoint en amont du ventilateur V1 6 par la tuyauterie d'appoint 7.

Dans le cas de la production papetière, l'air dans la hotte est chauffé habituellement à des températures d'environ 200-250 °C. L'air qui est extrait du four sort à une température variant entre 150 et 180°C.

Dans le cas de la production de non-tissé qui utilise le procédé de liage par jet d'eau, l'air dans la hotte est chauffé habituellement à des températures d'environ 100-150 °C. L'air qui est extrait du four est plutôt évacué à une température variant entre 70 et 120 °C.

Les températures de séchage pour la production de non-tissé qui utilise le procédé de liage par jet d'eau sont plus basses car certaines fibres constituant le non-tissé (POLYPROPYLENE ou POLYESTER par exemple) sont sensibles à une exposition à une trop grande température (rétrécissement en largeur de la nappe, diminution de l'épaisseur du voile, jaunissement du voile, altération des propriétés mécaniques du voile).

Plusieurs dispositifs d'amélioration décrivent différentes façons d'utiliser l'énergie thermique de l'air qui est rejeté par le four par la tuyauterie d'extraction.

Notamment, dans le cadre de la production de papier, un des dispositifs d'amélioration (cf brevets DE2802156B1 et US6551461) injecte cet air de dérivation encore chaud au-dessus d'une caisse de séchage située en amont du four afin de faire commencer en amont du four le procédé de séchage du voile (et diminuer ainsi le taux d'emport du voile en entrée de four).

L'air de dérivation est délivré par l'intermédiaire d'une caisse de diffusion 10 au-dessus d'une caisse de séchage 11 sur laquelle circule le voile.

Cette caisse de séchage 11 peut être intégrée dans un convoyeur ou dans un cylindre.

L'air encore chaud ainsi délivré va traverser le voile et va de ce fait évaporer une partie de l'eau contenue dans le voile.

L'air récupéré par la caisse de séchage 11 (froid et humide) est ensuite évacué vers l'extérieur (par un ventilateur d'extraction final par exemple).

Le système décrit ci-dessus fonctionne parfaitement bien lorsque la température de l'air rejeté par le four est supérieure à 150°C (cas de la production de papier). En effet, à ces températures, l'humidité relative du courant d'air qui est rejetée par le four va rester faible (< 5 %).

Lors du passage de ce courant d'air à travers le voile humide sur la caisse de séchage, sa température va encore s'abaisser et l'air va encore se charger davantage en humidité. Mais, du fait des conditions amont favorables

(Température élevée, humidité relative faible), il n'est pas possible que l'air aspiré arrive à saturation en traversant le voile sur la caisse de séchage et régénère de l'eau sur le voile par condensation.

Dans le cas d'un voile de non-tissé issu d'un procédé de liage par jet d'eau, ce système d'amélioration du séchage décrit dans les brevets DE2802156B1 et US6551461 ne fonctionne pas bien.

On constate une humidification du voile plutôt que son séchage.

L'invention pallie cet inconvénient par un procédé de séchage d'un voile humide de non-tissé en faisant passer dans un four, à travers du voile humide déplacé par un moyen de transport, de l'air chaud qui ainsi s'humidifie, en réchauffant une première partie de l'air humidifié et en le faisant repasser dans le four à travers du voile humide et en faisant passer dans un dispositif de séchage, en amont du four dans le sens de déplacement du voile, à travers du voile humide déplacé, une deuxième partie de l'air humidifié, caractérisée en ce que l'on règle l'humidité relative de l'air humidifié qui sort du dispositif de séchage à un taux de consigne inférieur à 100%.

On s'est rendu compte que du fait que les températures du courant d'air rejeté par le four sont bien plus basses (70°C-120°C) qu'en production de papier, l'humidité relative de ce courant peut être assez grande (20-40%). De ce fait, il y a un risque élevé que le courant d'air atteigne l'état de saturation en traversant le voile sur la caisse de séchage, ce qui a pour conséquence de remouiller le voile plutôt que d'enlever une partie de l'eau contenue dans le voile. De plus cette condensation peut se poursuivre dans la caisse d'aspiration, et dans le conduit menant au ventilateur d'extraction, empêchant son fonctionnement correct.

En réglant l'humidité relative de l'air humidifié qui sort du dispositif de séchage à un taux de consigne inférieur à 100 %, on évite le remouillage du voile.

On minimisera la dépense d'énergie pour sécher le produit en fixant le taux de consigne entre 70 et 99 % et de préférence entre 96 et 98 %. L'absence d'eau sous forme liquide en entrée du ventilateur d'extraction final permet de se dispenser d'installer un séparateur air/eau en amont du ventilateur.

On peut empêcher l'humidité relative de dépasser le taux de consigne en élevant la température de l'air chaud. On le peut aussi en augmentant le débit d'air chaud et/ou le débit de la première partie de l'air humidifié.

L'air dans le conduit de dérivation peut contenir des gaz de combustion (NOx, CO) dangereux pour les opérateurs. Il est bon que tout le débit insufflé soit aspiré pour ne pas diffuser de l'air pollué dans la salle de production. A cet effet on règle le débit de l'air humidifié qui sort du dispositif de séchage de manière à ce qu'il soit supérieur au débit de la deuxième partie de l'air humidifié. On imposera par exemple Q extraction = K * Q dérivation, avec K > 1.

Valeur préférée : K = 1,1.

L'invention vise aussi une installation de séchage d'un voile de non-tissé comprenant :

- un ventilateur,
- un four de chauffage ayant une entrée et une sortie,
- un conduit d'entrée, qui met le refoulement au ventilateur en communication avec l'entrée du four et envoie de l'air refoulé à l'entrée du four,
- une source de chaleur disposée de manière à ce que l'air refoulé dans le conduit d'entrée soit chauffé,
- un conduit de sortie, qui met la sortie du four en communication avec l'aspiration du ventilateur,
- un conduit de dérivation, en dérivation du conduit d'entrée en amont de la source de chaleur, mettant le conduit d'entrée en communication avec l'entrée d'un dispositif de séchage,
- un moyen de transport, qui déplace un voile dans le dispositif de séchage et dans le four, le dispositif de séchage étant en amont du four dans le sens de déplacement du voile,
- un conduit d'extraction de l'air du dispositif de séchage,
- une sonde de taux d'humidité, montée dans le conduit d'extraction et mesurant le taux d'humidité de l'air évacué du dispositif de séchage,
- la sonde étant reliée à une unité de régulation qui compare l'humidité relative à un taux de consigne et qui, si l'humidité relative est supérieure au taux de consigne,
- élève la température de la source de chaleur et/ou
- augmente le débit d'air dans le conduit d'entrée et/ou
- augmente le débit d'air dans le conduit de dérivation.

Par le montage de la sonde du taux d'humidité dans le conduit d'extraction, on entend que la sonde est montée en aval dans le sens de passage de l'air du voile de non-tissé dans le dispositif de séchage, la sonde étant ainsi éventuellement montée dans le dispositif de séchage lui-même. On prévoit de préférence un ventilateur d'extraction monté dans le conduit d'extraction de préférence juste en aval dans le sens de passage de l'air du dispositif de séchage. On prévoit aussi de préférence un ventilateur de dérivation monté dans le conduit de dérivation et/ou un volet de réglage du débit de l'air dans le conduit de dérivation. On peut prévoir aussi, de préférence, un débitmètre monté dans le conduit d'extraction, un débitmètre monté dans le conduit de dérivation et une unité de commande reliée en technique de signal aux deux débitmètres et réglant le débit de la conduite d'extraction de manière à ce qu'il soit supérieur au débit dans le conduit de dérivation.

La régulation suivant l'invention agit sur la température de séchage du four et/ou sur la vitesse de rotation du ventilateur principal du four et/ou sur la vitesse de rotation du ventilateur de dérivation du four et/ou sur la position des volets de réglage. Cette régulation empêche la condensation de l'air sur le voile, puisque l'air va toujours se trouver, dans la caisse de séchage ou en aval de la caisse de séchage faisant partie du dispositif de séchage, à une humidité relative inférieure à 100 %.

Pour une production de non-tissé donnée :

- Plus la température de séchage imposée dans le four sera haute, plus la température de l'air extrait du four sera haute et plus son humidité relative sera faible et donc plus l'humidité de l'air récupéré dans la caisse de séchage sera faible.

- Plus la vitesse de rotation du ventilateur de dérivation du four sera grande, plus le débit d'air rejeté par le four sera grand et plus l'humidité relative du courant d'air rejeté sera faible et donc plus l'humidité de l'air récupéré dans la caisse de séchage sera faible.

- Plus les volets de réglage situés sur la conduite de dérivation du four seront ouverts, plus le débit d'air rejeté par le four sera grand et plus l'humidité relative du courant d'air rejeté sera faible et donc plus l'humidité de l'air récupéré dans la caisse de séchage sera faible.

- Plus la vitesse de rotation du ventilateur principal du four sera grande, plus le débit d'air rejeté par le four sera grand et plus l'humidité relative du courant d'air rejeté sera faible et donc plus l'humidité de l'air récupéré dans la caisse de séchage sera faible.

Aux dessins annexés donnés uniquement à titre d'exemple :

la figure 1 est un schéma illustrant la technique antérieure,
la figure 2 est un schéma de circulation illustrant l'invention, et
la figure 3 est un schéma semblable à la figure 2 illustrant une variante.

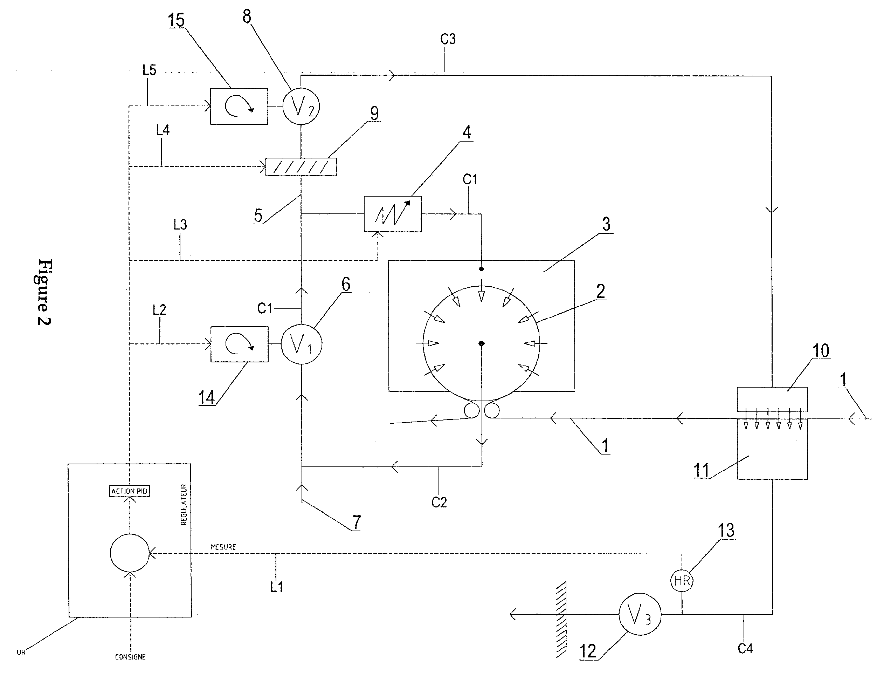

A la figure 2, Le voile à sécher 1 circule autour d'un tambour 2 (ou sur un convoyeur).

On injecte par un conduit C1 d'entrée de l'air chaud sous pression dans la hotte 3 grâce à un ventilateur V1 6 (appelé ventilateur principal) et à une source de chaleur 4 qui réchauffe l'air. Cette source de chaleur 4 peut être par exemple un brûleur à gaz ou un échangeur thermique (à huile, air, eau ou électrique).

Cet air chaud traverse ensuite le voile humide et le tambour 2 (ou la toile du convoyeur) : par ce procédé, l'eau contenue dans le voile est évaporée au fur et à mesure que le voile avance sur le tambour 2 (ou sur le convoyeur). L'air qui a traversé le voile s'est refroidi et s'est chargé en humidité. Il est alors aspiré par un conduit C2 d'extraction à l'intérieur du tambour 2 par le ventilateur V1 6, et à nouveau réchauffé par la source de chaleur 4 et réinjecté dans la boucle et ainsi de suite.

La source de chaleur 4 peut être placée en amont ou en aval du ventilateur V1 6. De préférence, elle est placée en aval comme décrit sur la figure, dans le cas d'un échangeur et en amont dans le cas d'un brûleur à gaz.

Le moteur de ce ventilateur V1 6 est piloté par un variateur de fréquence 14.

La température de l'air chaud injecté dans la hotte 3 est régulée par l'action de la source de chaleur 4.

Une partie de l'air refroidi et humide est évacué à l'extérieur de la boucle afin de ne pas concentrer l'humidité dans la boucle de circulation. On évacue donc une partie de l'air refroidi et humide par le conduit C3 de dérivation grâce à la pression générée en sortie par le ventilateur V1 (6) si elle est suffisante ou grâce à un ventilateur de dérivation supplémentaire V2 (8).

Le conduit C3 de dérivation peut être connecté en amont de V1.

Des volets 9 peuvent être installés dans le conduit C3 de dérivation afin de pouvoir réguler la valeur du débit extrait.

Dans le cas où il y a un ventilateur de dérivation V2 (8), le moteur de ce ventilateur peut être piloté par variateur de fréquence. S'il y a des volets de réglage 9, ce pilotage par variateur n'est pas nécessaire.

Pour combler ce déficit d'air dans la boucle, on aspire dans la salle de production de l'air d'appoint en amont du ventilateur V1 par la tuyauterie 7 d'appoint.

L'air refroidi et humide évacué par le conduit C3 de dérivation est injecté ensuite dans une caisse de diffusion 10 qui va diffuser l'air au-dessus d'une caisse aspirante de séchage 11 localisée en amont du four 3, sur laquelle circule le voile à sécher.

Cette caisse aspirante de séchage 11 peut être localisée soit dans un convoyeur (support voile = toile de convoyeur), soit dans un cylindre (support voile = cylindre nickel, tôle perforée, toile métallique).

L'air est aspiré dans la caisse de séchage 11 par un ventilateur d'extraction final V3 12. De préférence, ce ventilateur 12 est positionné au plus proche de la caisse de séchage 11.

Une sonde de mesure d'humidité relative 13 est installée dans la caisse de séchage 11 ou en aval de la caisse de séchage 11. De préférence, elle sera installée juste en amont du ventilateur 12 dans un conduit C4 d'extraction.

Cette sonde 13 mesure l'humidité relative de l'air dans la caisse de séchage 11 ou en aval de la caisse de séchage. De préférence, la mesure est effectuée juste en amont du ventilateur d'extraction final 12.

L'humidité relative mesurée dans la caisse de séchage 11 ou en aval de la caisse de séchage 11 (de préférence juste en amont du ventilateur d'extraction final 12) est régulée à une valeur inférieure à 100% par action sur la température de séchage du four et/ou sur la vitesse de rotation du ventilateur principal V1 6 du four et/ou sur la vitesse de rotation du ventilateur de dérivation V2 8 du four et/ou sur la position des volets de réglage 9.

Le signal de l'humidité relative est envoyé par une ligne L1 à une unité UR de régulation qui compare le signal à un taux de consigne et envoi des signaux de régulation en conséquence au ventilateur 6 par la ligne L2, à la source 4 de chaleur par la ligne L3 au volet 9 par la ligne L4 et/ou au ventilateur 8 (à son variateur 15) par la ligne L5.

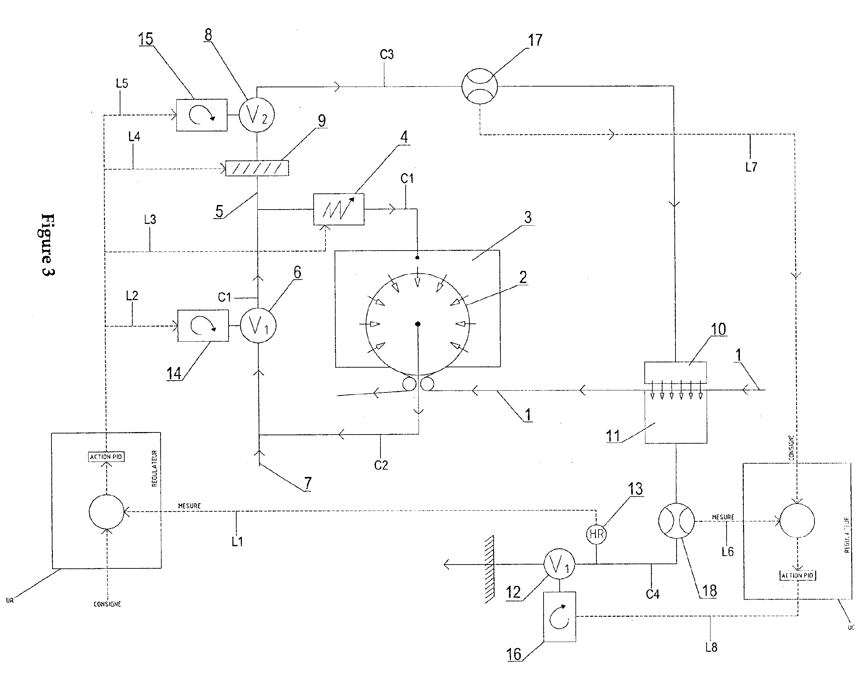

Dans une autre manière de réaliser l'invention (voir figure 3), on peut rajouter les éléments suivants à la configuration décrite dans la figure 2 :

Le moteur du ventilateur V3 12 est piloté par un variateur de fréquence 16.

Un débitmètre 17 mesure le débit extrait par le four dans le conduit C3 de dérivation. Ce débitmètre peut être installé avant ou après le ventilateur de dérivation V2 8.

Un débitmètre 18 mesure le débit d'air aspiré par la caisse aspirante de séchage 11. Ce débitmètre peut être installé avant ou après le ventilateur d'extraction final V3 12.

L'air extrait par le four peut contenir des gaz de combustion (NOx, CO) qui peuvent être dangereux pour les opérateurs travaillant sur la ligne de production. Pour que le système fonctionne correctement, il faut impérativement que 100% du débit insufflé par la caisse de diffusion soit aspiré par la caisse de séchage, sous peine de diffuser de l'air pollué dans la salle de production.

Pour satisfaire à cette condition, un système de régulation permettra de réguler la valeur du débit aspiré par la caisse de séchage (mesuré par le débitmètre 18) en fonction du débit dans le conduit de dérivation (mesuré par le débitmètre 17) grâce aux lignes L6, L7 et L8.

On imposera par exemple Q extraction = K * Q dérivation, avec K > 1.

Valeur préférée : K = 1,1

**Exemples :**

- Exemple d'une condition de production sans le système inventif (correspond à la configuration décrite sur la figure 2) :

On produit un voile 45 gsm 50% Viscose 50% PET à 220 m/min sur une laize de 3500 mm.

On utilise 4 injecteurs pour lier le voile, à des pressions de 50-80-120-120 bars avec des strips type 2J14-2J14-2J14-1J7

Strip 2J14 = 2 rangées, Diamètre des trous = 120μm, entraxe trous = 1.4 mm
Strip 1J7 = 1 rangée, Diamètre des trous = 120μm, entraxe trous = 0.7 mm

Le voile mouillé passe ensuite sur un convoyeur d'exprimage par le vide équipée de :

- 1 caisse dite d'exprimage bas vide : largeur fente = 10 mm, vide = - 100 mbar
- 1 caisse dite d'exprimage haut vide : largeur fente = 8 mm, vide = - 400 mbar

La toile du convoyeur a une perméabilité d'environ 800 cfm.
Dans ce convoyeur, en aval des 2 caisses d'exprimage, on a intégré la caisse de séchage (11) alimentée par le dessus par la caisse de diffusion (10). Cette caisse de séchage a une largeur de fente de 600 mm.

Juste en amont de cette caisse de séchage (après les 2 caisses d'exprimage), on mesure que le taux d'emport du voile est de 120 % (= 120 g d'eau pour 100 g de voile sec).

Quand le voile est passé sous la caisse de séchage, il est ensuite transporté jusqu'au four pour être complètement séché.

Le four qui est utilisé pour sécher ce voile est équipé d'un ventilateur de dérivation V2 8 et d'un ventilateur principal V1 6. Les moteurs de ces 2 ventilateurs sont pilotés par variateur de fréquence.

La source de chaleur 4 est un brûleur à gaz.

La tuyauterie de dérivation de ce four est connectée à la caisse de diffusion 10.

Afin d'obtenir un voile sec en sortie de four, les consignes suivantes ont été appliquées dans le four :

T° consigne air dans la hotte 3 : 120°C

% V1 = 70 %
% V2 = 85 %

On relève la température et l'humidité de l'air extrait par la tuyauterie de dérivation :

```
T°C = 82°C   HR = 20% (soit 70 g d'eau / kg d'air sec)
```

On mesure la température et l'humidité de l'air dans la caisse de séchage 11 :

T°C = 43°C HR = 100%

On constate la présence de gouttelettes d'eau dans cette caisse de séchage.

L'air dans la caisse de séchage est donc arrivé à saturation.

Juste après la caisse de séchage 11 (avant le four), on mesure que le taux d'emport du voile est de 130 %.

Cette valeur est supérieure à la valeur mesurée juste en amont de la caisse de séchage (120 %).

Le voile a donc été re-mouillé par le courant d'air arrivant de la gaine de dérivation du four.

Le système caisse de diffusion + caisse de séchage n'a pas pu abaisser le taux d'emport du voile avant le four donc, ne donne pas de résultat satisfaisant.

Dans ces conditions, le four consomme au total 2410 Kw, répartis en :

- 2320 Kw en gaz
- 90 Kw en électricité

• Exemple de la même condition de production avec le système inventif (correspond à la configuration décrite sur la figure 3 ou 4) : on régule la vitesse du ventilateur de dérivation V2 pour obtenir l'humidité relative désirée en amont du ventilateur d'extraction final V3.

On produit un voile 45 gsm 50% Viscose 50% PET à 220 m/min sur une laize de 3500 mm.

On utilise 4 injecteurs pour lier le voile, à des pressions de 50-80-120-120 bar avec des strips type 2J14-2J14-2J14-1J7

Strip 2J14 = 2 rangées, Diamètre des trous = 120$\mu$m, entraxe trous = 1.4 mm
Strip 1J7 = 1 rangée, Diamètre des trous = 120$\mu$m, entraxe trous = 0.7 mm

Le voile mouillé passe ensuite sur un convoyeur d'exprimage par le vide équipée de :

- 1 caisse dite d'exprimage bas vide : largeur fente = 10 mm, vide = - 100 mbar
- 1 caisse dite d'exprimage haut vide : largeur fente = 8 mm, vide = - 400 mbar

La toile du convoyeur a une perméabilité d'environ 800 cfm.

Dans ce convoyeur, en aval des 2 caisses d'exprimage, on a intégré la caisse de séchage 11 alimentée par le dessus par la caisse de diffusion 10. Cette caisse de séchage a une largeur de fente de 600 mm.

Juste en amont de cette caisse de séchage (après les 2 caisses d'exprimage), on mesure que le taux d'emport du voile est de 120 % (= 120 g d'eau pour 100 g de voile sec).

Quand le voile est passé sous la caisse de séchage, il est ensuite transporté jusqu'au four pour être complètement séché.

Le four qui est utilisé pour sécher ce voile est équipé d'un ventilateur de dérivation V2 8 et d'un ventilateur principal V1 6. Les moteurs de ces 2 ventilateurs sont pilotés par variateur de fréquence.

La source de chaleur 4 est un brûleur à gaz.

La tuyauterie de dérivation de ce four est connectée à la caisse de diffusion 10.

La caisse de séchage 11 est connectée à un ventilateur V3 12. On a installé juste en amont de ce ventilateur une sonde 13 qui mesure l'humidité relative du courant d'air.

On régule la vitesse du ventilateur de dérivation V2 pour obtenir l'humidité relative désirée en amont du ventilateur d'extraction final V3.

On impose une consigne de **95 %** pour cette humidité relative.

Afin d'obtenir un voile sec en sortie de four, les consignes suivantes ont été appliquées dans le four :

T° consigne air dans la hotte 3 : 120°C
% V1 = 55 %

La régulation a stabilisé la valeur de la vitesse de rotation du ventilateur V2 à **95 %.**

On relève la température et l'humidité relative de l'air extrait par la tuyauterie d'extraction :

```
T°C = 95°C   HR = 10% (soit 57 g d'eau / kg d'air sec)
```

On mesure la température et l'humidité de l'air dans la caisse de séchage 11 :

```
T°C = 47°C   HR = 95% (soit 69 g d'eau / kg d'air sec)
```

L'air, en traversant le voile sur la caisse de séchage a récupéré 69-57 = 12 g d'eau / kg d'air. Cette quantité correspond à la quantité d'eau qui a été extraite du voile par évaporation sur cette caisse de séchage.

On vérifie alors le taux d'emport du voile juste après la caisse de séchage : on mesure 101 %.

Cette valeur est donc bien inférieure à la valeur mesurée juste en amont de la caisse de séchage (120 %).

Le voile a donc été cette fois-ci partiellement séché par le courant d'air arrivant de la gaine de dérivation du four !!

L'air n'a pas condensé dans la caisse de diffusion.

Dans ces conditions, le four consomme au total 1860 Kw, répartis en :

- 1805 Kw en gaz
- 55 Kw en électricité

• Exemple de la même condition de production avec le système inventif (correspond à la configuration décrite sur la figure 3 ou 4) : on régule <u>la température de l'air injecté dans la hotte</u> pour obtenir l'humidité relative désirée en amont du ventilateur d'extraction final V3.

On produit un voile 45 gsm 50% Viscose 50% PET à 220 m/min sur une laize de 3500 mm.

On utilise 4 injecteurs pour lier le voile, à des pressions de 50-80-120-120 bar avec des strips type 2J14-2J14-2J14-1J7

Strip 2J14 = 2 rangées, Diamètre des trous = 120μm, entraxe trous = 1.4 mm
Strip 1J7 = 1 rangée, Diamètre des trous = 120μm, entraxe trous = 0.7 mm

Le voile mouillé passe ensuite sur un convoyeur d'exprimage par le vide équipée de :

- 1 caisse dite d'exprimage bas vide : largeur fente = 10 mm, vide = - 100 mbar
- 1 caisse dite d'exprimage haut vide : largeur fente = 8 mm, vide = - 400 mbar

La toile du convoyeur a une perméabilité d'environ 800 cfm.

Dans ce convoyeur, en aval des 2 caisses d'exprimage, on a intégré la caisse de séchage 11 alimentée par le dessus par la caisse de diffusion 10. Cette caisse de séchage a une largeur de fente de 600 mm.

Juste en amont de cette caisse de séchage (après les 2 caisses d'exprimage), on mesure que le taux d'emport du voile est de 120 % (= 120 g d'eau pour 100 g de voile sec).

Quand le voile est passé sous la caisse de séchage, il est ensuite transporté jusqu'au four pour être complètement séché.

Le four qui est utilisé pour sécher ce voile est équipé d'un ventilateur de dérivation V2 8 et d'un ventilateur principal V1 6. Les moteurs de ces 2 ventilateurs sont pilotés par variateur de fréquence.

La source de chaleur 4 est un brûleur à gaz.

La tuyauterie de dérivation de ce four est connectée à la caisse de diffusion 10.

La caisse de séchage 11 est connectée à un ventilateur V3 12. On a installé juste en amont de ce ventilateur une sonde 13 qui mesure l'humidité relative du courant d'air.

On régule la température de l'air injecté dans la hotte pour obtenir l'humidité relative désirée en amont du ventilateur d'extraction final V3.

On impose une consigne de **95 %** pour cette humidité relative.

Afin d'obtenir un voile sec en sortie de four, les consignes suivantes ont été appliquées dans le four :

% V1 = 50 %
% V2 = 85 %

La régulation a stabilisé la température de l'air injecté dans la hotte à **130°C.**

On relève la température et l'humidité relative de l'air extrait par la tuyauterie de dérivation :

```
T°C = 99°C  HR = 10% (soit 67 g d'eau / kg d'air sec)
```

On mesure la température et l'humidité de l'air dans la caisse de séchage 11 :

```
T°C = 51°C  HR = 95% (soit 82 g d'eau / kg d'air sec)
```

L'air, en traversant le voile sur la caisse de séchage a récupéré 82-67 = 15 g d'eau / kg d'air. Cette quantité correspond à la quantité d'eau qui a été extraite du voile par évaporation sur cette caisse de séchage.

On vérifie alors le taux d'emport du voile juste après la caisse de séchage : on mesure 105 %. Cette valeur est donc bien inférieure à la valeur mesurée juste en amont de la caisse de séchage (120 %).

Le voile a donc été cette fois-ci partiellement séché par le courant d'air arrivant de la gaine de dérivation du four !!

L'air n'a pas condensé dans la caisse de diffusion.

Dans ces conditions, le four consomme au total 1935 Kw, répartis en:

- 1897 Kw en gaz
- 38 Kw en électricité.

**Revendications**

1. Procédé de séchage d'un voile humide de non-tissé en faisant passer dans un four, à travers du voile humide déplacé par un moyen de transport, de l'air chaud qui ainsi s'humidifie, en réchauffant une première partie de l'air humidifiée et en le faisant repasser dans le four à travers le voile humide et en faisant passer dans un dispositif de séchage, en amont du four dans le sens de déplacement du voile, à travers du voile humide déplacé, une deuxième partie de l'air humidifié, **caractérisé en ce que** l'on règle l'humidité relative de l'air humidifié qui sort du dispositif de séchage à un taux de consigne inférieur à 100 %.

2. Procédé suivant la revendication 1, **caractérisé en ce que** l'on fixe le taux de consigne entre 70% et 99 %.

3. Procédé suivant la revendication 1 ou 2, **caractérisé en ce que** l'on empêche l'humidité relative de dépasser le taux de consigne en élevant la température de l'air chaud.

4. Procédé suivant l'une quelconque des revendications 1 à 3, **caractérisé en ce que** l'on empêche l'humidité relative de dépasser le taux de consigne en augmentant le débit d'air chaud et/ou le débit de la première partie de l'air humidifié.

5. Procédé suivant l'une quelconque des revendications 1 à 4, **caractérisé en ce que** l'on règle le débit de l'air humidifié qui sort du dispositif de séchage de manière à ce qu'il soit supérieur au débit de la deuxième partie de l'air humidifié.

6. Installation de séchage d'un voile de non-tissé **caractérisée en ce qu'**elle comprend :

- un ventilateur (6),
- un four (3) de chauffage ayant une entrée et une sortie,
- un conduit (C1) d'entrée qui met le refoulement du ventilateur (6) en communication avec l'entrée du four (3) et envoie de l'air refoulé à l'entrée du four,
- une source (4) de chaleur disposée de manière à ce que l'air refoulé dans le conduit (C1) d'entrée soit chauffé,
- un conduit (C2) de sortie qui met la sortie du four (3) en communication avec l'aspiration du ventilateur (6),
- un conduit (C3) de dérivation, en dérivation du conduit (C1) d'entrée en amont de la source (4) de chaleur, mettant le conduit (C1) d'entrée en communication avec l'entrée d'un dispositif (10, 11) de séchage,
- un moyen (2) de transport qui déplace un voile dans le dispositif (10, 11) de séchage et dans le four (3), le dispositif (10, 11) de séchage étant en amont du four (3) dans le sens de déplacement du voile,
- un conduit (C4) d'extraction de l'air du dispositif (10, 11) de séchage,
- une sonde (13) de taux d'humidité, montée dans le conduit (C4) d'extraction et mesurant le taux d'humidité de l'air évacué du dispositif (10, 11) de séchage,
- la sonde (13) étant reliée à une unité de régulation qui compare l'humidité relative à un taux de consigne et qui, si l'humidité relative est supérieure au taux de consigne,
- élève la température de la source (4) de chaleur et/ou
- augmente le débit d'air dans le conduit (C1) d'entrée et/ou
- augmente le débit d'air dans le conduit (C3) de dérivation.

7. Installation suivant la revendication 6, **caractérisée par** un ventilateur (8) de dérivation monté dans le conduit (C3) de dérivation.

8. Installation suivant la revendication 6 ou 7, **caractérisée par** un volet (9) de réglage du débit de l'air dans le conduit (C3) de dérivation.

9. Installation suivant l'une des revendications 6 à 8, **caractérisée par** un ventilateur d'extraction monté dans le conduit (C4) d'extraction, de préférence juste en aval, dans le sens de passage de l'air, du dispositif (10, 11) de séchage.

10. Installation suivant l'une des revendications 6 à 9, **caractérisée par** un débitmètre (18) monté dans le conduit (C4) d'extraction, par un débitmètre (17) monté dans le conduit (C3) de dérivation et par une unité (UC) de commande, relié en technique de signal aux débitmètres (17) et (18) et réglant le débit dans le conduit (C4) d'extraction de manière à ce qu'il soit supérieur au débit dans le conduit (C3) de dérivation.

**Patentansprüche**

1. Verfahren zum Trocknen einer feuchten Vliesbahn, indem in einem Ofen durch die mittels eines Transportmittels bewegte feuchte Bahn heiße Luft geleitet wird, die somit feucht wird, ein erster Teil der befeuchteten Luft erhitzt wird und sie in dem Ofen erneut durch die feuchte Bahn geleitet wird und indem in einer Trocknungsvorrichtung, stromauf des Ofens in der Bewegungsrichtung der Bahn, ein zweiter Teil der befeuchteten Luft durch die bewegte feuchte Bahn geleitet wird, **dadurch gekennzeichnet, dass** die relative Feuchtigkeit der befeuchteten Luft, welche aus der Trocknungsvorrichtung austritt, auf einen Sollgehalt von weniger als 100 % eingestellt wird.

2. Verfahren nach Anspruch 1, **dadurch gekennzeichnet, dass** der Sollgehalt zwischen 70 % und 99 % festgelegt wird.

3. Verfahren nach Anspruch 1 oder 2, **dadurch gekennzeichnet, dass** durch Erhöhen der Temperatur der heißen Luft verhindert wird, dass die relative Feuchtigkeit den Sollgehalt überschreitet.

4. Verfahren nach einem der Ansprüche 1 bis 3, **dadurch gekennzeichnet, dass** durch Erhöhen des Durchsatzes an heißer Luft und/oder des Durchsatzes des ersten Teils der befeuchteten Luft verhindert wird, dass die relative Feuchtigkeit den Sollgehalt überschreitet.

**5.** Verfahren nach einem der Ansprüche 1 bis 4, **dadurch gekennzeichnet, dass** der Durchsatz der befeuchteten Luft, die aus der Trocknungsvorrichtung austritt, derart eingestellt wird, dass er größer als der Durchsatz des zweiten Teils der befeuchteten Luft ist.

**6.** Anlage zum Trocknen einer Vliesbahn, **dadurch gekennzeichnet, dass** sie umfasst:

   - einen Ventilator (6),
   - einen Ofen (3) zum Erhitzen, der einen Eingang und einen Ausgang aufweist,
   - eine Eingangsleitung (C1), welche die Druckseite des Ventilators (6) mit dem Eingang des Ofens (3) verbindet und Verdrängungsluft an den Eingang des Ofens schickt,
   - eine Wärmequelle (4), die derart angeordnet ist, dass die Verdrängungsluft in der Eingangsleitung (C1) erhitzt wird,
   - eine Ausgangsleitung (C2), die den Ausgang des Ofens (3) mit der Saugseite des Ventilators (6) verbindet,
   - eine von der Eingangsleitung stromauf der Wärmequelle (4) abzweigende Zweigleitung (C3), welche die Eingangsleitung (C1) mit dem Eingang einer Trocknungsvorrichtung (10, 11) verbindet,
   - ein Transportmittel (2), das eine Bahn in der Trocknungsvorrichtung (10, 11) und in dem Ofen (3) bewegt, wobei die Trocknungsvorrichtung (10, 11) in der Bewegungsrichtung der Bahn stromauf des Ofens (3) gelegen ist,
   - eine Leitung (C4) zum Abziehen der Luft aus der Trocknungsvorrichtung (10, 11),
   - eine Sonde (13) für den Feuchtigkeitsgehalt, die in der Abzugsleitung (C4) angebracht ist und den Feuchtigkeitsgehalt der aus der Trocknungsvorrichtung (10, 11) abgeführten Luft misst,
   - wobei die Sonde (13) mit einer Regelungseinheit verbunden ist, welche die relative Feuchtigkeit mit einem Sollgehalt vergleicht und welche, wenn die relative Feuchtigkeit über dem Sollgehalt liegt,
   - die Temperatur der Wärmequelle (4) erhöht und/oder
   - den Luftdurchsatz in der Eingangsleitung (C1) erhöht und/oder
   - den Luftdurchsatz in der Zweigleitung (C3) erhöht.

**7.** Anlage nach Anspruch 6, **gekennzeichnet durch** einen Abzweigventilator (8), der in der Zweigleitung (C3) angebracht ist.

**8.** Anlage nach Anspruch 6 oder 7, **gekennzeichnet durch** eine Klappe (9) zur Regulierung des Durchsatzes der Luft in der Zweigleitung (C3).

**9.** Anlage nach einem der Ansprüche 6 bis 8, **gekennzeichnet durch** einen Abzugsventilator, der in der Abzugsleitung (C4) vorzugsweise genau stromab der Trocknungsvorrichtung (10, 11), in der Durchgangsrichtung der Luft, angebracht ist.

**10.** Anlage nach einem der Ansprüche 6 bis 9, **gekennzeichnet durch** einen Durchflussmesser (18), der in der Abzugsleitung (C4) angebracht ist, **durch** einen Durchflussmesser (17), der in der Zweigleitung (C3) angebracht ist, und **durch** eine Steuereinheit (UC), die signaltechnisch mit den Durchflussmessern (17) und (18) verbunden ist und den Durchsatz in der Abzugsleitung (C4) derart regelt, dass er größer als der Durchsatz in der Zweigleitung (C3) ist.

**Claims**

**1.** Method for drying a damp web of non-woven material by passing hot air into an oven through the damp web moved by a transport means, which hot air thus humidifies, by reheating a first portion of humidified air and passing it back into the oven through the damp web and by passing a second portion of humidified air into a drying device, upstream of the oven in the displacement direction of the web, through the displaced damp web, **characterised in that** the relative humidity of humidified air which leaves the drying device is controlled to a guide level of less than 100%.

**2.** Method according to claim 1, **characterised in that** the guide level is fixed between 70% and 99%.

**3.** Method according to either claim 1 or claim 2, **characterised in that** the relative humidity is prevented from exceeding the guide level by raising the temperature of hot air.

**4.** Method according to any one of claims 1 to 3, **characterised in that** the relative humidity is prevented from exceeding the guide level by increasing the flow of hot air and/or the flow of the first portion of humidified air.

**5.** Method according to any one of claims 1 to 4, **characterised in that** the flow of humidified air which exits from the drying device is controlled so that it is greater than the flow of the second portion of humidified air.

**6.** Installation for drying a web of non-woven material **characterised in that** it comprises:

- a fan (6),
- a heating oven (3) with an inlet and an outlet,
- an inlet pipe (C1) which puts the discharge of the fan (6) in communication with the inlet of the oven (3) and sends discharged air to the inlet of the oven,
- a heat source (4) arranged such that the air discharged into the inlet pipe (C1) is heated,
- an outlet pipe (C2) which puts the outlet of the oven (3) in communication with the intake of the fan (6),
- a branch pipe (C3), branching off from the inlet pipe (C1) upstream of the heat source (4), putting the inlet pipe (C1) in communication with the inlet of a drying device (10, 11),
- a transport means (2) which moves a web in the drying device (10, 11) and in the oven (3), the drying device (10, 11) being upstream of the oven (3) in the direction of movement of the web,
- an extraction pipe (C4) for the air of the drying device (10, 11),
- a probe (13) for the humidity level mounted in the extraction pipe (C4) for measuring the level of humidity in the air evacuated from the drying device (10, 11),
- the probe (13) being connected to a control unit which compares the relative humidity to a guide level and which, if the relative humidity is greater than the guide level:
- raises the temperature of the heat source (4) and/or
- increases the flow of air in the inlet pipe (C1) and/or
- increases the flow of air in the branch pipe (C3).

**7.** Installation according to claim 6, **characterised by** a branch fan (8) mounted in the branch pipe (C3).

**8.** Installation according to either claim 6 or claim 7, **characterised by** a flap (9) for controlling the flow of air in the branch pipe (C3).

**9.** Installation according to any one of claims 6 to 8, **characterised by** an extraction fan mounted in the extraction pipe (C4), preferably just downstream in the direction of the passage of air, of the drying device (10, 11).

**10.** Installation according to any one of claims 6 to 9, **characterised by** a flowmeter (18) mounted in the extraction pipe (C4), by a flowmeter (17) mounted in the branch pipe (C3) and by a control unit (UC) connected by signal technology to flowmeters (17) and (18) and controlling the flow in the extraction pipe (C4) such that it is greater than the flow in the branch pipe (C3).

Figure 1

Figure 2

Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 2802156 B1

- US 6551461 B